# EUROPÄISCHE PATENTANMELDUNG

(11) **EP 0 534 349 A2**
(43) Veröffentlichungstag der Anmeldung: **31.03.1993**
(21) Anmeldenummer: 92116122.0
(22) Anmeldetag: 21.09.1992
(51) Int. Cl.: A01K 3/00, A01B 3/00

(54) **Anordnung zur Abschrankung des Bereichs zwischen zwei Begrenzungselementen, insbesondere des Durchgangs eines Elektrozauns**

(30) Priorität: 23.09.1991 DE 4131580
(71) Anmelder: Firma UDO WERNER, D-46354 Südlohn (DE)
(72) Erfinder: Werner, Udo, W-4286 Südlohn (DE)
(74) Vertreter: Zenz, Joachim Klaus, Dipl.-Ing.

(57) **Zusammenfassung**

Wenigstens ein Ende eines Bandes (3) ist an einer federbetätigten Aufwickelvorrichtung (6) befestigt, die das Band durch Aufwickeln zu verkürzen sucht. An dem freien anderen Ende des Bandes ist eine Zugkräfte übertragende lösbare Kupplung (8) vorgesehen. Die Spannungseinspeisung erfolgt über die Aufwickelvorrichtung (6) und/oder über die lösbaren Kupplungsmittel. Das Band wird im Betrieb durch die Aufwickelvorrichtung gespannt gehalten und bei Öffnen des Durchgangs weitgehend in die Aufwickelvorrichtung eingezogen, so daß sich die Anordnung automatisch auf stark unterschiedliche Durchgangsbreiten anpaßt und eine Gefährdung von Tieren und Menschen im Abschrankbereich minimiert ist.

## Beschreibung

Die Erfindung bezieht sich auf eine Anordnung zur Abschrankung des Bereichs zwischen zwei Begrenzungselementen, insbesondere eines Durchgangs in einem Elektrozaun, durch wenigstens ein elektrisch leitendes Band oder Seil.

Elektrozäune mit elektrisch leitenden Bändern oder Seilen werden bei der Viehhaltung sowie in Wildgehegen bevorzugt verwendet, da sie im Gegensatz zu mechanisch wirkenden Begrenzungen (Stacheldrähten, Spannseilen, Gattern) die Verletzungsgefahr für Tier und Mensch und die Beschädigungsgefahr am Gehege im betrieblichen Einsatz minimieren. Problematisch war bisher die Einbindung von Durchgängen oder Toren in Elektrozäune. Tore oder Durchgänge müssen einfach zu öffnen und zu verschließen sein, was bei elektrisch abgeschrankten Bereichen bisher nur mit ungünstigen Nebeneffekten erreichbar war.

Eine bekannte Form der Torgestaltung stellt das verstellbare Elektrotor dar. Dieses Tor weist einen Metallrahmen mit Mitteln zum Einhängen des Tores zwischen zwei Begrenzungspfosten auf. Die Breite des Metallrahmens ist verstellbar. Zwischen den seitlichen Randelementen des Metallrahmens sind flexible, elektrisch leitende Seile gespannt. Die Nachteile solcher verstellbaren Elektrotore sind ihre relativ komplizierte und damit teure Ausbildung, die Notwendigkeit senkrecht stehender Begrenzungspfosten mit entsprechenden Aufhängevorrichtungen für das Elektrotor, die sehr begrenzte Verstellbarkeit der Breite des Tores und die Baugröße.

Eine andere bekannte Lösung für die Abschrankung eines Durchgangs in einem Elektrozaun stellt das Spannen eines elektrisch leitenden Seiles oder Bandes zwischen zwei Zaunpfählen dar, wobei das Band auf der einen Seite (an der die Spannung eingespeist wird) an einem Pfahl des Elektrozauns befestigt ist und an der anderen Seite ein sogenannter Torgriff vorgesehen ist. Der Torgriff weist ein elektrisch isoliertes Griffstück und einen Haken auf, mit dem das elektrisch leitende Band oder Seil am gegenüberliegenden Pfahl in eine Öse eingehakt wird. Diese bekannte Torabschrankung hat mehrere betriebliche und bauliche Nachteile: Bei Öffnen des Durchgangs stellt das frei herabhängende spannungsführende Band oder Seil eine Leitungsbrücke zum Erdboden dar und bildet mit den Bandschleifen eine Gefahrenquelle für den Durchgang benutzende Tiere und Menschen.

Es ist ferner bekannt, im Durchgangsbereich eine Torfeder in Form einer elektrisch leitfähigen, stark dehnbaren Spiralfeder zu verwenden, die auf der einen Seite des Durchgangs unter Spannungseinspeisung an einem Pfahl befestigt wird, und die auf der anderen Seite einen Griff mit einem Haken aufweist. Zum Schließen des Durchgangs wird die Torfeder mit Hilfe des Griffes quer über den Durchgang gespannt und der Haken am gegenüberliegenden Pfahl in eine Öse eingehakt. Im geöffneten Zustand des Durchgangs hängt die Feder lose an ihrer Befestigung am Pfahl. Nach längerem Gebrauch kann es infolge von Materialermüdung und/oder Überdehnung der Feder vorkommen, daß sich die Feder beim Öffnen des Durchgangs nicht mehr ausreichend verkürzt. Ein weiterer Nachteil einer solchen Torfeder ist die Gefahr des Einklemmens von Tierhaaren zwischen den sich schließenden Spiralwindungen der Feder beim Öffnen des Durchgangs. Es hat sich in der Praxis gezeigt, daß Tiere infolge einer Einklemmung von Haaren eine Schockbelastung erleiden können mit der Folge unkontrollierbarer Reaktionen.

Es ist daher Aufgabe der Erfindung, eine Anordnung der eingangs genannten Art zur Verfügung zu stellen, die die Einsatzmöglichkeiten erweitert und die Verletzungsgefahr für Tier und Mensch vermindert.

Diese Aufgabe wird durch die Merkmale des Patentanspruchs 1 gelöst.

Die erfindungsgemäße Anordnung ist im Rahmen der Abzugslänge des Bandes oder Seils aus der Aufwickelvorrichtung für beliebige Durchgangsbreiten verwendbar und kann an beliebigen Torbegrenzungselementen angebracht werden. Durch diese universelle Einsatzmöglichkeit ergeben sich hohe Stückzahlen und niedrige Produktionskosten. Vorteilhaft ist das Aufwickeln des Bandes oder Seiles auf die Aufwickelvorrichtung auch deshalb, weil einerseits das Problem der Ablage des Bandes beim geöffneten Durchgang beseitigt, die Sicherheit für Mensch und Tier optimiert und der Platzbedarf bei eingezogenem Band oder Seil minimiert ist. Darüberhinaus kann die erfindungsgemäße Anordnung nicht nur zur Abschrankung eines Tores oder Durchgangs verwendet werden, sondern bei Hintereinanderschaltung mehrerer Anordnungen auch zur flexiblen Umzäunung eine Areals.

Bei einem bevorzugten Ausführungsbeispiel ist die Anordnung an zwei Zaunpfählen angebracht, wobei die federbetätigte Aufwickelvorrichtung an einem der Zaunpfähle befestigt und das freie Ende des Bandes oder Seiles an dem anderen Begrenzungselement (Zaunpfahl) ankoppelbar ist.

Eine andere vorteilhafte Weiterbildung der Erfindung sieht die Befestigung jeweils einer federbetätigten Aufwickelvorrichtung an den beiden Begrenzungselementen vor. Die jeweils freien Enden der beiden Bänder oder Seile sind über lösbare Kupplungsmittel miteinander verbindbar. Auf diese Weise können auch besonders breite Durchgänge oder Bereiche abgeschrankt werden (doppelte Auszugslänge).

Von Vorteil ist die Ausbildung der federbetätigten Aufwickelvorrichtung als Haspel, die von einem Federmotor in Aufwickelrichtung vorgespannt ist. Derartige bekannte Federmotoren sind relativ einfach zu fertigen.

Weitere zweckmäßige Weiterbildungen der Erfindung sind in den Unteransprüchen gekennzeichnet.

Vorteilhafterweise erlaubt die Erfindung die Abschrankung des Durchgangs mit einem elektrisch leitfähigen Band, wie es vor allem bei Pferdezäunen angewendet wird und welches für die Tiere gut sichtbar ist. Die Flexibilität der Anordnung gestattet auch die Abschrankung von Durchgängen mit schrägen Begrenzungen und auf geneigtem Boden. Die Anordnung mehrerer paralleler Seile oder Bänder ist ebenfalls unproblematisch.

Die Befestigung der Aufwickelvorrichtung an dem Begrenzungselement kann in vielfältiger Weise erfolgen. Ein gehäusefester Bajonettverschluß erlaubt die einfache Anbringung und die axiale Kupplung mehrerer federbetätigter Aufwickelvorrichtungen, was zusätzlich die Flexibilität der Abschrankung erhöht.

Im folgenden wird die Erfindung anhand von in der Zeichnung schematisch dargestellten Ausführungsbeispielen erläutert. In der Zeichnung zeigen:
- Fig. 1: eine Prinzipskizze eines Ausführungsbeispiels der erfindungsgemäßen Anordnung;
- Fig. 2: eine Innenansicht auf eine federbetätigte Aufwickelvorrichtung mit einem Band;
- Fig. 3: eine schematische Teilansicht der Aufwickelvorrichtung gemäß Fig. 2;
- Fig. 4: ein Ausführungsbeispiel mit zwei aufeinandergesteckten Aufwickelvorrichtungen und Bandumlenkeinrichtungen;
- Fig. 5: ein Ausführungsbeispiel mit drei Bändern und gemeinsamer Griffleiste.

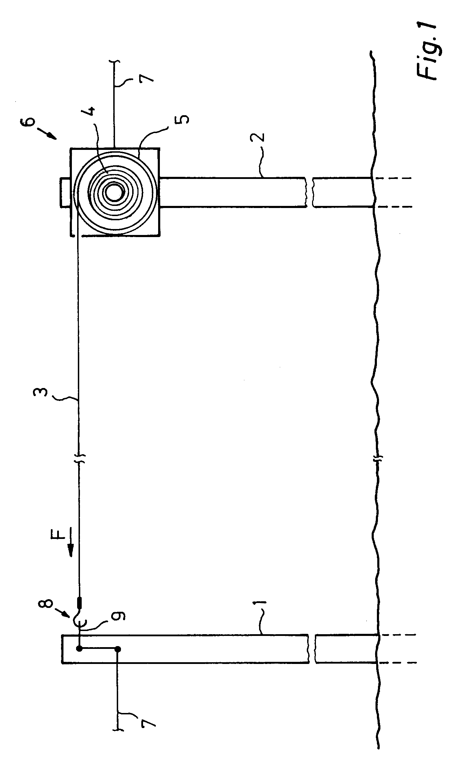

In Fig. 1 ist das Prinzip der erfindungsgemäßen Anordnung dargestellt. In einem Elektrozaun, bestehend aus einem elektrisch leitenden Band oder Seil 7, das zwischen Pfählen 1 und 2 gespannt ist, befindet sich zwischen einem rechten Pfahl 2 und einem linken Pfahl 1 ein Durchgang. Die Abschrankung des Durchgangs erfolgt durch ein elektrisch leitendes Seil 3. Ein Ende des Seiles 3 ist an einer federbetätigten Aufwickelvorrichtung 6 befestigt, die das Seil durch Aufwickeln zu verkürzen sucht. Die federbetätigte Aufwickelvorrichtung 6 ist am rechten Pfahl 2 befestigt. Die federbetätigte Aufwickelvorrichtung 6 ist als Haspel 5 ausgebildet, die von einem Federmotor 4 in Aufwickelrichtung vorgespannt ist. Wird mit einer Kraft F am freien Ende des Seiles 3 gezogen, so wickelt sich das Seil 3 von der Haspel 5 ab, und die Feder des Federmotors 4 wird gespannt. Zum Schließen des Durchgangs zwischen dem Pfahl 2 und dem Pfahl 1 wird das Seil 3 soweit aus dem Gehäuse der Aufwickelvorrichtung 6 herausgezogen, bis ein am freien Ende des Seiles angebrachter Haken 8 in eine am Pfahl 1 befestigte Öse 9 eingehakt werden kann. Der Haken 8 und die Öse 9 sind aus elektrisch leitendem Material. Die Öse 9 ist elektrisch leitend mit dem spannungsführenden Band oder Seil 7 des Elektrozauns verbunden. Nach Einhaken des Hakens 8 in die Öse 9 wird somit die Spannung in das elektrisch leitende Seil 3 eingespeist. Eine zweite Möglichkeit der Spannungseinspeisung steht am Pfahl 2 zur Verfügung, wenn sowohl die Haspel als auch der Federmotor aus elektrisch leitendem Material bestehen und wenn eine leitende Verbindung zwischen dem Elektrozaun 7 und der elektrisch leitenden Haspel hergestellt wird. Die Strom- bzw. Spannungseinspeisung kann beispielsweise über die Befestigung der federbetätigten Aufwickelvorrichtung 6 in deren Achsbereich erfolgen. Zum Öffnen des Durchgangs wird der Haken 8 aus der Öse 9 ausgehakt. Der Federmotor 4 wickelt das Seil 3 auf die Haspel 5 auf.

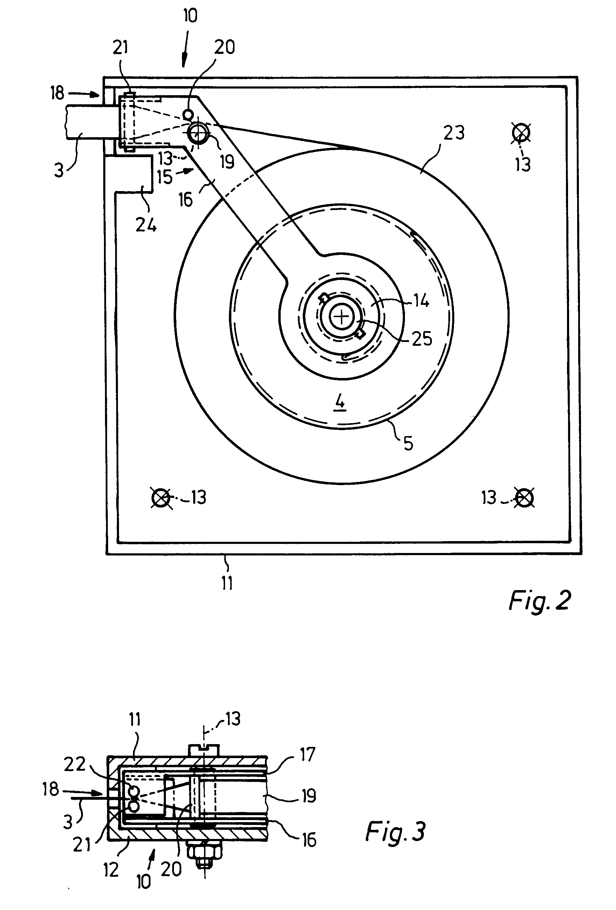

Bei Pferdezäunen ist es erwünscht, anstelle des elektrisch leitenden Seiles 3 ein etwa 1-4 cm breites elektrisch leitendes Band zu verwenden. Dies erhöht die Sichtbarkeit der spannungsführenden Teile der Umzäunung (Warneffekt). Bei Anwendung eines Bandes zur Abschrankung des Durchgangs ist es bei einer Anordnung der Aufwickelvorrichtung 6 gemäß Fig. 1 zweckmäßig, daß das Band 3 in einer zur Wickelachse quer verlaufenden Ebene aus der Aufwickelvorrichtung 6 austritt, d.h. in die Ebene des Durchgangs umgelenkt wird. Eine federbetätigte Aufwickelvorrichtung für ein Band mit einer entsprechenden Bandumlenkvorrichtung 10 ist in den Fig. 2 und 3 schematisch dargestellt. Die federbetätigte Aufwickelvorrichtung 6 hat ein aus zwei Gehäusehälften 11, 12 zusammengesetztes Gehäuse, das beispielsweise im Spritzgußverfahren aus Kunststoff hergestellt ist. In Fig. 2 ist die Aufwickelvorrichtung unter Fortlassen einer Gehäusehälfte dargestellt. Die beiden Gehäusehälften 11, 12 werden durch Schraubverbindungen 13 zusammengehalten. Im Inneren des Gehäuses befindet sich die Haspel 5, auf die das Band 3 aufgewickelt ist. Im Inneren der Haspel 5 ist der Federmotor um eine Hohlwelle 14 angeordnet, wobei ein Ende der Feder des Federmotors an der Hohlwelle 14 befestigt und das andere Ende der Feder mit der Haspel 5 verbunden ist. Ein mit der Hohlwelle 14 drehfester Verbindungsträger 15 ist (an zwei Stellen) am Gehäuse festgelegt, so daß die Hohlwelle 14 im Gehäuse fixiert ist. Der Verbindungsträger 15 weist zwei im wesentlichen parallele flache Trägerholme 16 und 17 auf, die in der Nähe der Gehäusedurchführung 18 des Bandes 3 abgewinkelte Lappen tragen. Die abgewinkelten Trägerholme 16 und 17 bilden gemeinsam mit Führungsstiften 19, 20, 21 und 22 die Bandumlenkvorrichtung 10, die dafür sorgt, daß das Band 3 zwischen Ablaufstelle des Bandes vom Bandwickel 23 und Gehäusedurchführung 18 um 90° gedreht wird. Ein in den Gehäuseinnenraum hineinragender Vorsprung 24 ist an der Gehäusewandung angeformt und sorgt für eine stabile Lagerung der Bandumlenkvorrichtung 10 und insbesondere der Umlenkstifte 21 und 22.

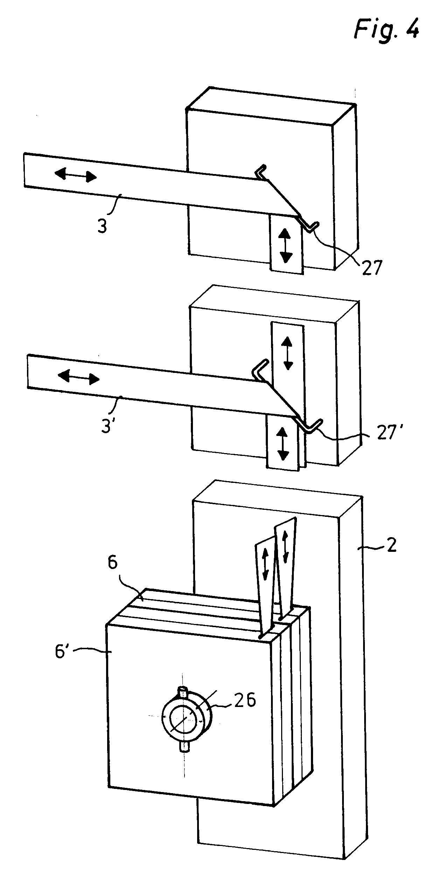

Die Hohlwelle 14 ist in dem in Fig. 2 dargestellten Ausführungsbeispiel an beiden Enden mit den komplementären Teilen eines Bajonettverschlusses versehen. Der Bajonettstecker 26 (Fig. 4) bildet das eine Ende, und die Bajonettaufnahme 25 ist dem entgegengesetzten Ende der Hohlwelle 14 zugeordnet. Der Bajonettstecker 26 der einen Aufwickelvorrichtung 6 kann in die Bajonettaufnahme 25 einer flanschartig und koaxial aufgesetzten zweiten Aufwickelvorrichtung 6' (Fig. 4) formschlüssig eingreifen. Auf diese Weise können die mehreren Bändern 3 und 3' zugeordneten Aufwickelvorrichtungen 6 und 6' (zusätzlich auch eine dritte oder vierte Aufwickelvorrichtung) paketartig zusammengesetzt, formschlüssig miteinander verbunden und mittels eines axialen Verbindungsdornes an einem lagefesten Befestigungselement angebracht werden. Gegebenenfalls kann auch ein Bajonettstecker 26 an einem Pfosten befestigt werden, so daß eine beliebige Anzahl von Aufwickelvorrichtungen bzw. deren Gehäuse mit wenigen Handgriffen montiert werden kann.

Die in den Fig. 2 und 3 dargestellte Ausführungsform der Aufwickelvorrichtung 6 besitzt eine integrierte Umlenkvorrichtung im Austrittsspalt 18 des Bandes 3. Eine Umlenkvorrichtung erhöht die Gefahr von Betriebsstörungen einerseits durch die Umlenkung des Bandes und andererseits durch verstärkte Abnutzung des Bandes in den Kantenbereichen. Zudem erhöht eine integrierte Umlenkung auch die Gestehungskosten der Aufwickelvorrichtung selbst. Eine deutliche Sichtbarkeit der bandförmigen Abschrankung ist auch dann gewährleistet, wenn die Umlenkung des Bandes in die Ebene des abzuschrankenden Bereiches in diesem Bereich selbst erfolgt. Zu diesem Zweck kann das Band rechtwinklig zur Abschrankebene aus der Aufwickelvorrichtung 6 ausgegeben und mit dem freien Ende um 90° gedreht eingehakt werden. Das Band könnte auch mehrmals gedreht werden, so daß es von allen Seiten gleichermaßen gut sichtbar ist.

Eine andere Alternative einer Bandumlenkung außerhalb des Gehäuses jeder Aufwickelvorrichtung 6 bzw. 6' in in Fig. 4 schematisch dargestellt. Dort sind schräggestellte, bügelförmige Umlenkelemente 27 und 27' fest mit einem das Begrenzungselement bildenden Pfahl oder Pfosten 2 verbunden. Die Durchführung des Bandes 3 durch den unteren Bügel 27' ist nur eine von verschiedenen Möglichkeiten; selbstverständlich können die beiden vertikalen Trums der beiden Bänder 3 und 3' auf dem Pfahl 2 nebeneinander verlaufen, wobei die beiden Bügel 27 und 27' zweckmäßigerweise nicht nur vertikal sondern auch horizontal versetzt voneinander angeordnet sind.

Bei der Ausführungsform gemäß Fig. 4 (über Bajonettverschlüsse zusammengeflanschte, unabhängig wirksame Aufwickelvorrichtungen 6 und 6') kann die Spannungszufuhr zentral über die als solche leitende oder mit leitenden Komponenten versehene Hohlwelle erfolgen. Der mechanische Formschluß zwischen den Hohlwellen benachbarter Aufwickelvorrichtungen 6 und 6' gewährleistet auch eine weitgehend verlustfreie, zuverlässige elektrische Kopplung.

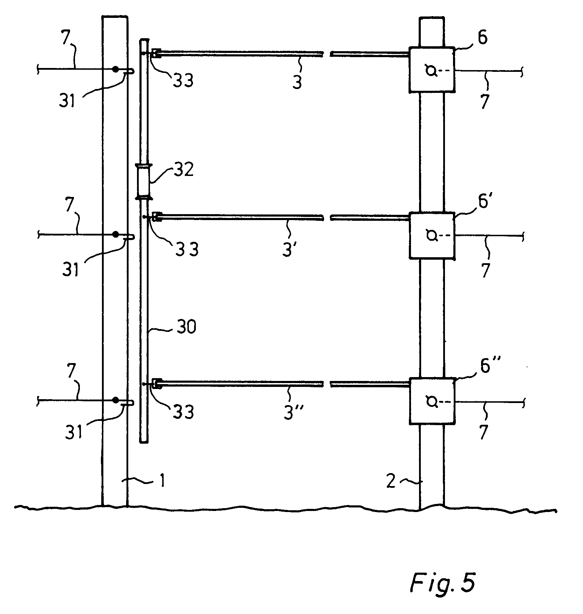

In Fig. 5 ist ein Ausführungsbeispiel der Erfindung mit drei den Durchgang oder das Tor abschrankenden Bändern 3, 3', 3'' dargestellt. An dem rechten Pfahl 2 sind drei federbetätigte Aufwickelvorrichtungen 6, 6', 6'' befestigt. Die drei Bänder 3, 3', 3'' tragen an ihren freien Enden Karabinerhaken 33, die an einer elektrisch leitenden Leiste 30 lösbar befestigt sind. Zum Schließen des Durchgangs wird die Leiste 30 in die elektrisch leitenden Haken 31 eingehakt, die jeweils mit den spannungsführenden Seilen oder Bändern des Elektrozauns 7 verbunden sind. Die Leiste ist mit einem elektrisch isolierenden Griffstück 32 versehen.

Wie oben gesagt, bestehen die Gehäuse bzw. Gehäusekomponenten vorzugsweise aus einfachen Kunststoffteilen. Sowohl zum Zusammenbau als auch zur Wartung ist es zweckmäßig, die Gehäuseteile über lösbare Verbindungen, beispielsweise über Schraubverbindungen zu kuppeln. In der bevorzugten einfachen Ausführung der Aufwickelvorrichtung, bei der das aus der schlitzförmigen Durchgangsöffnung austretende Seiltrum tangential zum Seilwickel 23 verläuft, sind bei geeigneter Seitenführung des gesamten Trums zwischen zwei Scheiben geeigneter Größe kaum Störungen zu erwarten; auch der Verschleiß ist gering. Andere Ausführungen können aber vor allem verschleißbedingt oder wegen der Kontrolle oder Wartung elektrischer Übergänge eine Zugänglichkeit durch Öffnen des Gehäuses erforderlich machen. Zum Öffnen der beiden Gehäusehälften kann auch ein zentraler Schraubverschluß im Bereich der Hohlwelle selbst vorgesehen sein.

Im Rahmen des Erfindungsgedankens sind zahlreiche Abwandlungen möglich. So können die Aufwickelvorrichtungen auch für zwei nebeneinander angeordnete Tore oder Bereiche an einem einzigen Zaunpfahl oder einem anderen Befestigungselement angebracht sein. Sie können koaxial, mit und ohne Umlenkung des Bandes 3 bzw. 3' und ggf. auch über eine Vertikalführung verschiebbar angebracht werden. Auch hinsichtlich der Materialwahl der zur erfindungsgemäßen Anordnung gehörigen Teile und Komponenten gibt es kaum Einschränkungen. Wesentlich ist nur, daß zumindest die stromführenden Seile bzw. Bänder 3 mit einer Spannungsquelle leitend verbunden sind und daß die jeweilige Aufwickelvorrichtung eine ausreichende Seilkapazität hat, damit das Seil 3 den freien Raum zwischen zwei benachbarten Pfählen 1 und 2 überspannen kann. Unterhalb der maximalen Spannweite des Seils 3 sind die Abstände zwischen den Pfählen 1 und 2 beliebig; die erfindungsgemäße Anordnung paßt sich automatisch diesen Abständen an, wobei der Federmotor 4 für eine ständige Straffung des Seils 3 sorgt und bei Freigabe des abzuschrankenden Bereichs ein Zurückziehen des Seils oder Bandes 3 bis in den Bereich einer Umlenkstelle oder der Durchgangsöffnung 18 gewährleistet ist.

## Patentansprüche

1. Anordnung zur Abschrankung des Bereichs zwischen zwei Begrenzungselementen (1, 2), insbesondere eines Durchgangs in einem Elektrozaun (7), durch wenigstens ein elektrisch leitendes Band oder Seil (3),
**dadurch gekennzeichnet,**
daß wenigstens ein Ende des Bandes oder Seiles (3) an einer feder- und/oder motorbetätigten Aufwickelvorrichtung (6) befestigt ist, die das Band oder Seil durch Aufwickeln zu verkürzen sucht,
daß an dem anderen (freien) Ende des Bandes oder Seiles Zugkräfte übertragende lösbare Kupplungsmittel (8; 33) vorgesehen sind, und
daß das Band oder Seil mit Spannungseinspeisungsmitteln gekoppelt ist.

2. Anordnung nach Anspruch 1, dadurch gekennzeichnet, daß zumindest eines der Begrenzungselemente (1, 2) ein Zaunpfahl ist.

3. Anordnung nach Anspruch 1 oder 2, dadurch gekennzeichnet, daß zumindest eines der Begrenzungselemente (1, 2) an einem Fahrzeug angebracht ist.

4. Anordnung nach einem der Ansprüche 1 bis 3, dadurch gekennzeichnet, daß die federbetätigte Aufwickelvorrichtung (6) an einem Begrenzungselement (1, 2) befestigt ist.

5. Anordnung nach Anspruch 4, dadurch gekennzeichnet, daß das freie Ende des Bandes oder Seiles (3) an dem anderen Begrenzungselement (1) ankoppelbar ist.

6. Anordnung nach einem der Ansprüche 1 bis 3, dadurch gekennzeichnet, daß an beiden Begrenzungselementen (1, 2) jeweils eine federbetätigte Aufwickelvorrichtung (6) befestigt ist, und daß die freien Enden der beiden Bänder oder Seile über die lösbaren Kupplungsmittel (8; 33) miteinander verbindbar sind.

7. Anordnung nach einem der Ansprüche 1 bis 6, dadurch gekennzeichnet, daß die federbetätigte Aufwickelvorrichtung (6) als Haspel (5) ausgebildet ist, die von einem Federmotor (4) in Aufwickelrichtung vorgespannt ist.

8. Anordnung nach einem der Ansprüche 1 bis 7, dadurch gekennzeichnet, daß die Kupplungsmittel (8, 9) zum lösbaren Befestigen des Bandes oder Seiles (3) wenigstens einen Haken (8) aufweisen.

9. Anordnung nach einem der Ansprüche 1 bis 8, dadurch gekennzeichnet, daß die Kupplungsmittel (8, 9) elektrisch leitend ausgebildet sind und die Spannungseinspeisung in das Band oder Seil (3) über die Kupplungsmittel erfolgt.

10. Anordnung nach einem der Ansprüche 1 bis 8, dadurch gekennzeichnet, daß die Spannungseinspeisung in das elektrisch leitende Band oder Seil (3) an der federbetätigten Aufwickelvorrichtung (6) erfolgt.

11. Anordnung nach einem der Ansprüche 1 bis 10, dadurch gekennzeichnet, daß ein Band (3) in einer Wickelebene mit mehreren Windungen auf eine Aufwickelhaspel (5) aufgewickelt und über eine zur Wickelachse lagefeste Durchführung (18) aus der Aufwickelvorrichtung (6) austritt.

12. Anordnung nach Anspruch 11, dadurch gekennzeichnet, daß die Durchführung (18) so ausgebildet ist, daß das Band (3) in einer zur Wickelachse quer verlaufenden Ebene aus der Aufwickelvorrichtung (6) austritt.

13. Anordnung nach Anspruch 11 oder 12, dadurch gekennzeichnet, daß zwischen Ablaufstelle des Bandes (3) vom Bandwickel (23) und Durchführung (18) eine Bandführung (16, 17, 19, 20, 21, 22) vorgesehen ist.

14. Anordnung nach einem der Ansprüche 1 bis 13, dadurch gekennzeichnet, daß mehrere Aufwickelvorrichtungen (6) über gehäusefeste Bajonettverschlüsse (25) miteinander axial kuppelbar sind.
